# EUROPEAN PATENT APPLICATION

(11) **EP 4 101 808 A1**
(43) Date of publication of application: **14.12.2022**
(21) Application number: 22177329.4
(22) Date of filing: 03.06.2022
(51) Int. Cl.: B67B 3/20, B67B 3/24

(54) **AUTOMATIC CONTAINER CAPPING MACHINE**

(30) Priority: 07.06.2021 ES 202131172
(71) Applicant: Asesoría y Representaciones Técnicas Agroalimentarias y Consumibles, SL, 50180 Utebo (Zaragoza) (ES)
(72) Inventor: Tornos Calvo, Roberto, 50180 Utebo (Zaragoza) (ES)
(74) Representative: Schäfer, Matthias W.

(57) **Abstract**

Automatic capping machine for containers in the food sector, by means of twist-off lids, carried out in a totally automated way, with the simultaneous application of a vacuum in the container to prevent air from entering in it, which would significantly reduce the preservation time of the food contained inside.

The machine has a hood (8) with internal clamps (14) and a capping head (9) in which the capping takes place. The lids are fed from a hopper (10) via a chute (11) and a lid positioner (13).

The invention presented affords the main advantage of performing container capping in high-vacuum conditions, using conventional containers that are standard in the glass market, with metal twist-off lids, making food packaging possible without requiring any type of covering liquid inside the container, as well as allowing the control and pre-configuration of the lid closing torque before initiating the work cycle.

## Description

The present description relates, as its title indicates, to an automatic capping machine for containers in the food sector, generally glass containers, by means of twist-off lids, carried out in a totally automated way, with the simultaneous application of a vacuum in the container to prevent air from entering in it, which would significantly reduce the preservation time of the food contained inside.

### Field of the invention

The invention refers to the field of automatic machines for capping containers for food products by means of twist-off lids, preferably glass containers with metal lids.

### Current State of the Art

In the field of the practical application of the invention, machines allowing the application and closing of lids on the corresponding containers once full, are widely known and used, such as that described, for example, in utility models ES1225684 *"Rigid container capping machine"* and ES2222843 *"Capping machine for canning jars and similar".* This capping process is carried out at atmospheric pressure, with the drawback that if the container is not perfectly full up to the brim of its mouth, it tends to be capped with air inside, which obviously will cause premature oxidation of the food inside and consequently shorten the duration of the product being canned. In many cases it is usual to add a covering liquid to the product, when it is not a liquid or paste-like product in an attempt to reduce the volume of air remaining inside, as is described in US10987719B2 *"Can filling*/*seaming device and can filling*/*seaming method*"*,* but this is a solution that involves complicating the capping machine and makes it more expensive, as well as causing many problems from undesirable spillage of liquids along the container route that can lead to failures and require frequent cleaning, in addition to which it is not technically possible to fill the entire empty space with liquid as there will always be a minimal air space under the lid that will affect the preservation of the food negatively.

The possibility of adjusting width and height to adapt to jars and lids is also known, as described in US4559760A *"Universal capping machine",* but it is never associated with vacuum closure devices.

To try to overcome this problem, we also know of the application of inert gases over the container mouth, at the same time as the capping process is carried out for the purpose of displacing air, such as for example, oxygen or nitrogen, which may remain inside the container, as is claimed in JP2002046709A *"Method and apparatus for reducing oxygen content remaining in can"* and JP2007069990A "*Gas replacement apparatus and replacement method of can".* This solution has the drawback of being expensive due to the need for a large volume of inert gases, storage cylinders and means for their application, as well as needing essential safety checks for handling these gases. Furthermore, introducing these gases does not help to maintain the air tightness between the jar and lid during closing, as this can only be achieved with sufficient guarantees by using a container capping process with an internal vacuum.

Solutions are also known that involve capping machines that use a steam system to expel the air inside the container, as is described in ES1188083U *"Container capping machine",* but they involve problems such as being very technically complex and high on energy consumption due to requiring a boiler or steam generator with a constant pressure.

There are also a few specific containers for the use of a vacuum inside them, such as that described in WO2011148001 *"Container for conserving and marketing vacuum-packed foodstuffs"* formed by means of the combination of a body and a lid with a specific vacuum closure, but this solution is only applicable to this type of purpose-made container, with special technical characteristics and it is not applicable to standard conventional containers in the glass market with metal twist-off lids, which are those most used by producers and packers of foodstuffs.

### Description of the invention

In order to resolve currently existing problems with capping containers for food products, preferably glass containers, by means of twist-off lids, the automatic container capping machine that is the object of this invention has been devised, which avoids having to apply inert gases or steam since the container capping process takes place in an environment at a lower pressure than atmospheric pressure, in high-vacuum conditions.

For this purpose, and more specifically, the machine of the invention is made up of a frame that involves a structure as a bridge, on which there is a hopper at the top that stores the lids to be applied; the said frame also includes an in-feed conveyor belt which supplies the containers to be capped that are directed towards a first centring station after which, in a second phase, the container is transferred to the capping position.

In this position a hood covers the container completely. Then the container is secured with internal grippers or clamps to the hood itself while a vacuum is generated inside the hood and the lid is applied by means of a vertically movable rotary mechanism, which is previously fed with the corresponding lid.

Thus, the lids are supplied through a drop chute and through a lid positioner so that once the lid is in position on the capping head, it is taken to the mouth of the container and secured with a set programmable closing torque.

After the container has been capped, the positioning device moves the container to a second conveyor belt, parallel to the in-feed conveyor belt, through which the containers, now capped, are delivered.

Consequently, the machine comprises four main sub-stations, a hopper with a lid dispensing system, the vacuum hood plus lid closing mechanism unit, a control panel provided with a programming screen and a container positioning unit to position containers between an in-feed belt and an exit belt for the containers once capped.

The control panel allows all of the operating parameters of the machine to be configured: vacuum pump, closing torque, servomotors and various actuators to adjust jar and lid widths, adapting the machine's operation to different container models, to different products, or to different production needs, and carrying out fully automated operation. It also has means both for storing information, either locally in the machine or in an external computer, with the different types of containers and products and their corresponding work parameters required in the machine, and for saving the data required to ensure the traceability of the process.

### Advantages of the invention

This automatic container capping machine that is presented, affords numerous advantages over currently available equipment and techniques, the most important being that it carries out the capping of the container in high-vacuum conditions, using conventional standard containers in the glass market with metal twist-off lids, something that, until now, has not been achieved by any other capping machine in the market.

As a result of capping the container in high-vacuum conditions, it is possible to package foods without the need to use any type of covering liquid inside the container.

Another advantage obtained is the reduction of oxygen inside the container, achieving an almost absolute vacuum, which results in both a more perfect closure of the container and a longer duration of the canned product.

It must also be noted that capping the container in high-vacuum conditions gives rise to new categories of preserved foods such as, for example, products cooked at low temperatures in high-vacuum conditions or products without a canning liquid, which makes it easier to implement changes in the manufacturing processes of the machine's end users and to adapt to new products to be preserved in jars.

Another important advantage of using high vacuum compared to traditional capping machines is the great energy savings in the consumption of steam and water as well as the elimination of costly inert gas supply and control equipment, along with their inherent risks.

It is also important to highlight that, apart from configuring the vacuum carried out inside the container, the machine which is the object of this invention is also capable of controlling and pre-configuring the lid closing torque before initiating the work cycle.

Another important point is that all of the operating parameters of the machine: vacuum pump, closing torque, servomotors and various actuators to adjust jar and lid widths, can be easily controlled, programmed and stored via the control panel, allowing both the easy adaption of the machine's operation to different container models, to different products, or to different production needs, and its fully automated operation.

It is noteworthy that the control panel is equipped both with means to store databases, either locally in the machine or in an external computer, with the different types of containers and products and their corresponding work parameters required for the machine, and it also has the means to save the necessary data on each manufacturing batch, allowing the capping carried out for each batch to be tracked in order to use it in association with the preservation of the product.

### Description of the figures

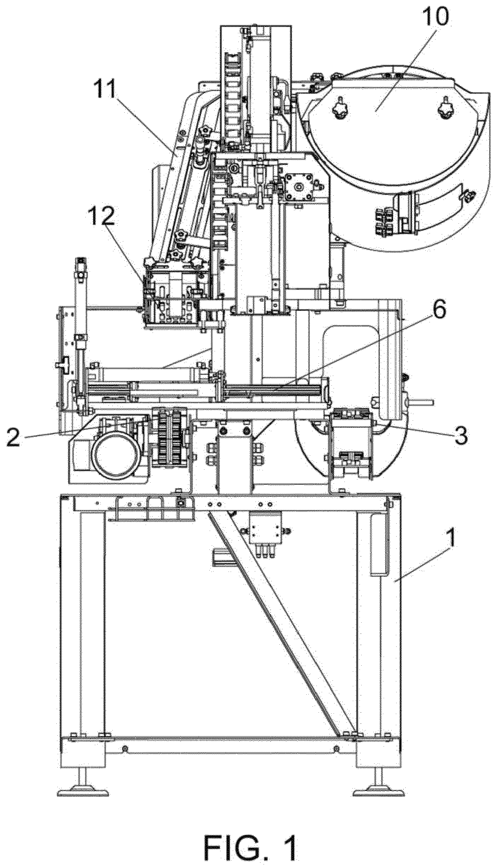

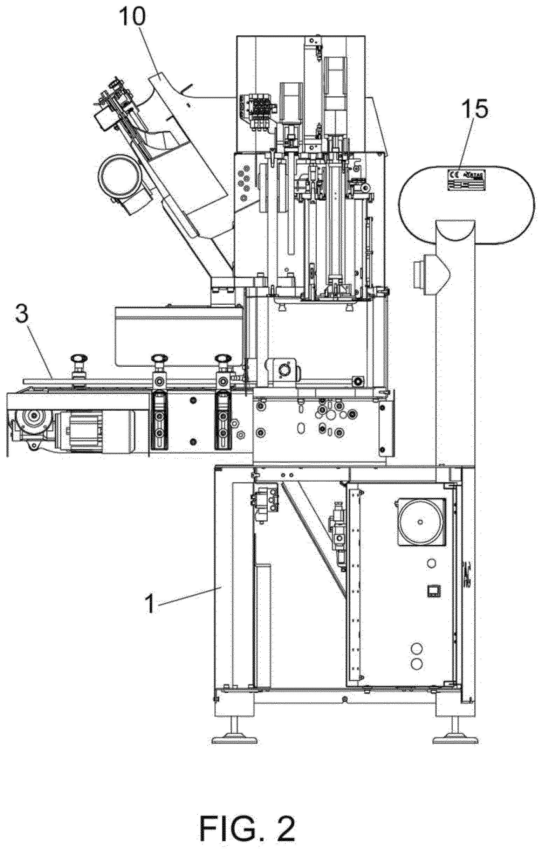

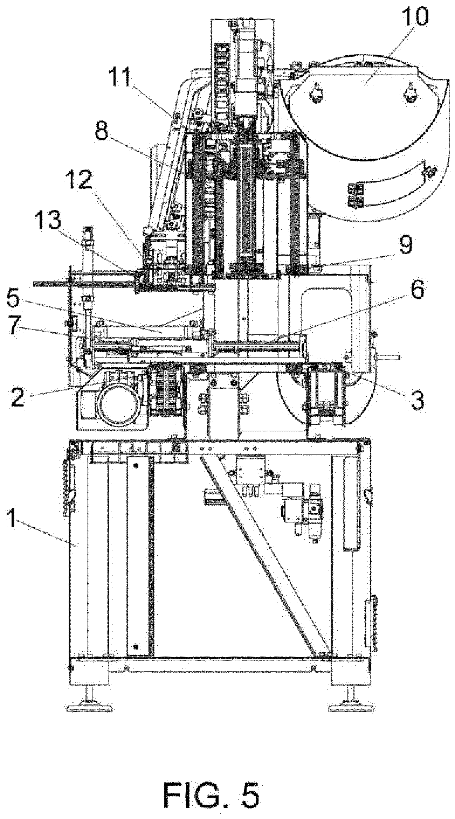

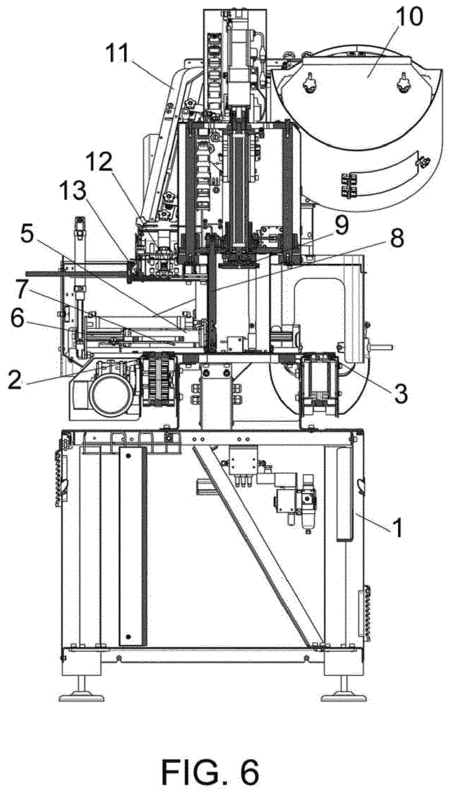

To add to the description that is given below and to help gain a better understanding of the characteristics of the invention, in accordance with a reference example of a practical embodiment, a series of drawings that form an integral part of the said description are included, in which, with an illustrative and non-limiting character, the following is shown:
Figure -1- shows a front perspective view of a container capping machine of a packaging machine, made in accordance with the object of this invention.
Figure -2- shows a side elevation view of the machine of the previous figure.
Figure -3- shows a perspective detail of the machine in the capping zone, with the hood elevated and the lid positioner in the position to feed the capping head.
Figure -4- shows a top perspective view of the interior of the hood, in which the clamps that stabilise the jar during the capping process can be seen.
Figure -5- shows a similar view to that of figure 1, but in which the machine appears in cross section in its intermediate or container capping zone to show its internal elements, the machine appearing with the hood in the top or inoperative position.
Figure -6- shows a similar view to that of figure 5 but in which the hood appears in an operational state.
Finally, figure -7- shows a detail of the container positioning mechanism.

### Preferred embodiment of the invention

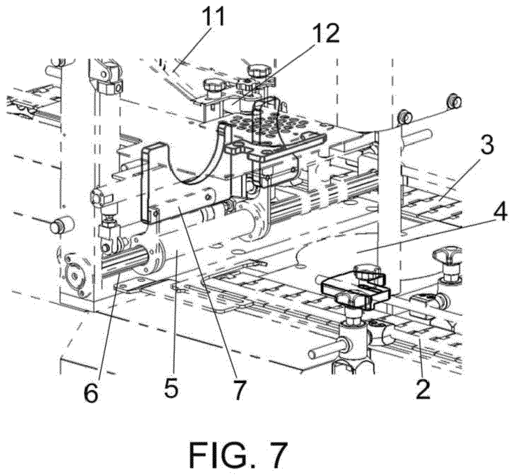

The constitution and characteristics of the invention can be better understood from the following description that refers to the attached figures, and in particular to figures 1 and 7, in which it can be seen that the machine of the invention is made up of a frame (1) on which there is an in-feed conveyor belt (2) along which the uncapped containers, filled with the corresponding product are fed, and an exit conveyor belt (3), on which the containers, now capped, come out. These belts are parallel to each other so that the final end of one is facing the start end of the other, defining a work space (4) between both ends, as shown in figure 7, in which the jar capping process is carried out.

For the jar capping process in the work zone (4), the machine has a centring station, in which, when the containers reach the final end of the in-feed conveyor belt (2) they are moved transverse to the said belt by a mechanism that involves a carriage (5), that is movable axially and at an angle on a shaft (6), the carriage being associated with a plate (7) with a "U"-shaped notch, the diameter of which is according to the diameter of the container to be moved. It is envisaged that the plate (7), or jar positioning blade, has the means for adjusting its width in order to adapt to different jar diameters, although alternatively, it may be interchangeable with different plates (7) with different fixed widths.

Thus, once the container reaches the final end of the in-feed conveyor belt (2), the carriage with the plate (7) in vertical position, moves until it is opposite the container, it then tilts the plate (7) so that it grips the container and then the carriage proceeds to move axially on the shaft (6) to place the container in the work zone (4).

Above the work zone (4) there is a hood (8) that is vertically movable and capable of hermetically sealing the said work zone (4). This hood is associated with means that can create a vacuum inside it, preferably up to 10 mbar absolute vacuum. Such means for creating a vacuum may be, for example, a vacuum pump, pneumatic depressor, venturi device, or any other functionally equivalent device.

Concentric to the hood (8), and inside it, located over the zone where the jar is positioned, there is a head (9), that is also vertically movable in an independent manner from the hood (8), which includes means for its angular rotation, this element being in charge of placing the lids on the mouth of the jars and closing them by rotation. Also inside the hood (8) there are clamps (14) that can press against the walls of the jar to immobilise it.

The means for vertically moving the hood (8) and the head (9) can be linear actuators or servomotors. The means for angular rotation of the head (9) preferably will be servomotors although they can be any other combination of angle motors with sensors capable of regulating and measuring the torque applied, with the required precision.

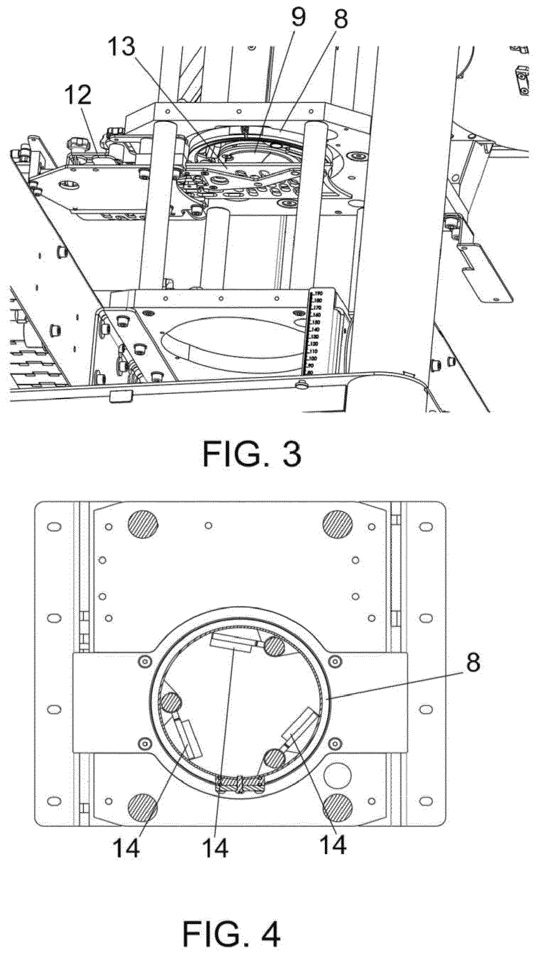

The machine also has a hopper (10) in which the lids to be applied are stored, associated with a drop chute (11), the end opening (12) of which is opposite a lid positioner (13) in the form of a horizontally movable element which moves the lid from the end opening (12) to the height of the head (9), which includes means for securing the said lid, all of which as can be seen in the detail in figure 3. It is envisaged that the drop chute (11) that supplies the lids, has means to adjust its width in order to adapt to different lid diameters, although alternatively it may be interchangeable with different drop chutes (11) with different fixed widths.

The means for adjusting the width of the plate (7) and of the drop chute (11) may be any of those currently known to control the movement of a part, such as linear actuators, servomotors, etc...

It also includes a control panel (15) that is responsible for controlling the automatic operating sequence of all of the machine elements, vacuum pump, servomotors and various actuators, with its corresponding graphic interface for selecting and pre-programming different types of containers, for which the necessary parameters are stored: tightening torques for the head (9), vacuum pressure inside the hood (8), width of the plate (7), width of the drop chute (11), etc. The control panel (15) may also include means for storing data, and/or means for communicating with an external control computer, allowing the capping process that is carried out to be tracked for each batch, for it to be used in association with the preservation of the products.

The machine also has a centralised lubrication system that facilitates machine maintenance tasks.

The characteristic operation of this machine is as follows:
Once the lid has been placed in the corresponding securing means of the head (9), located vertically over the jar, the jar positioner (13) is withdrawn, and the hood (8) moves down until it seals and isolates the work zone (4) where the container to be capped is perfectly positioned.

Then, a pre-programmed vacuum is applied inside the hood (8) and the internal clamps (14) are activated to press against the jar's walls to immobilise it. The pre-programmed vacuum applied creates high-vacuum conditions inside the hood (8) which are controllable and programmable for each type of container via the control panel screen (15). As the jar is inside the hood these same vacuum conditions are also applied to the jar to be capped.

Once the required vacuum has been created inside the hood (8), the head (9) moves down with the lid positioned in its securing means until it coincides with the jar neck, and it rotates until the pre-programmed closing torque for that container is reached. Configuration and precise control by servomotors allows the closing torque applied to the lid to be controlled with a sensitivity of around 0.05 N/m. This ensures that oxygen does not enter the container and that it is perfectly capped with the pre-set tightening torque.

Once the container has been capped, the head (9) and the hood (8) are raised, leaving the container accessible to the carriage (5), which by means of the plate (7) moves the capped container to the exit conveyor belt (3).

Although all of these mechanisms are synchronised and automated, the machine is equipped with means for controlling each of them separately.

A person skilled in the art will easily comprehend that the characteristics of different embodiments can be combined with the characteristics of other possible embodiments, provided that the combination is technically possible.

All of the information referring to examples or embodiments form part of the description of the invention.

## Claims

1. - Automatic container capping machine, **characterised in that** it comprises a frame (1) on which there is an in-feed conveyor belt (2) of containers to be capped, and an exit conveyor belt (3), to deliver the containers once capped, between which there is a work zone (4), where there are the means for capping the containers, it having been envisaged that, between one conveyor belt and the other there is a mechanism for moving the containers from the end of the in-feed conveyor belt (2) towards the work zone (4) and finally towards the exit conveyor belt (3), there being, over this work zone (4), a vertically movable hood (8), concentric to which there is a head (9) that is movable vertically and at an angle, the machine having a hopper (10) for storing the lids to be applied, associated with a drop chute (11) whose end opening (12) is opposite a lid positioner (13), in the form of an element for horizontally moving the lid from the end opening (12) of the chute to the height of the head (9), which includes means for securing the said lid, it also having been envisaged for the hood (8) to include, inside it, internal clamps (14) to immobilise the container to be capped, as well as having means to create a vacuum inside the hood (8) when it is in a lowered position.

2. - Automatic container capping machine, according to claim 1, **wherein** the mechanism for moving the containers from the end of the in-feed conveyor belt (2) towards the work zone (4) and towards the exit conveyor belt (3), is in the form of a mechanism that involves a carriage (5), movable both axially and at an angle on a shaft (6), the said carriage being associated with an interchangeable plate (7) which has a "U"-shaped notch, of a diameter that matches the diameter of the container to be moved.

3. - Automatic container capping machine, according to claim 1, **wherein** the head (9) includes means for applying a pre-programmed tightening torque of the lid on the container.

4. - Automatic container capping machine, according to claim 1, **wherein** it includes a control panel (15) with its corresponding graphic interface, capable of selecting and pre-programming different types of containers, tightening torques or vacuum pressures.

5. - Automatic container capping machine, according to claims 1 and 4 **wherein** the control panel (15) includes means for controlling each of the mechanisms involved in the machine separately.

6. - Automatic container capping machine, according to claim 1, **wherein** the drop chute (11) supplying the lids has the means to adjust its width, according to different lid diameters.

7. - Automatic container capping machine, according to claim 1, **wherein** it includes a centralised lubrication system.
